# EUROPÄISCHE PATENTSCHRIFT

(11) **EP 0 523 273 B1**
(45) Veröffentlichungstag und Bekanntmachung des Hinweises auf die Patenterteilung: **03.05.1995**
(21) Anmeldenummer: 91112078.0
(22) Anmeldetag: 19.07.1991
(51) Int. Cl.: H01M 2/12, H01M 2/04

(54) **Akkumulator, insbesondere Bleiakkumulator, vorzugsweise für Nutzkraftwagen**
Accumulator, especially leadaccumulator, preferably for a truck station wagon
Accumulateur, en particulier accumulateur en plomb, de préférence pour véhicule commercial

(43) Veröffentlichungstag der Anmeldung: 20.01.1993
(73) Patentinhaber: Accumulatorenwerke Hoppecke Carl Zoellner & Sohn GmbH & Co. KG, D-59914 Brilon (DE); VB Autobatterie GmbH, D-30419 Hannover (DE)
(72) Erfinder: Bernardi, Walter, W-5790 Brilon (DE); Hampe, Werner, W-3538 Marsberg 12 (DE); Böhle, Christian Dr., W-3008 Garbsen 1 (DE); Gummelt, Klaus, W-3008 Garbsen 1 (DE); Streuer, Peter, W-3000 Hannover 61 (DE)
(74) Vertreter: Stenger, Watzke & Ring Patentanwälte

(56) Entgegenhaltungen:
- EP-A- 0 107 469
- EP-A- 0 123 369
- EP-A- 0 274 612
- DE-A- 3 112 512
- DE-U- 8 003 869
- DE-U- 9 005 603
- FR-A- 970 461
- FR-A- 2 334 213
- FR-A- 2 591 803
- US-A- 3 772 088
- US-A- 4 851 305

## Beschreibung

Die Erfindung betrifft einen Akkumulator, insbesondere Bleiakkumulator, vorzugsweise für Nutzkraftwagen, mit einem mehrere Zellen aufweisenden Gehäuse sowie mit einem das Gehäuse abschließenden Deckel, in dem zwischen einem Unterteil und einem dazu im Abstand angeordneten Oberteil ein labyrinthartiger Hohlraum zur Säureabscheidung ausgebildet ist, wobei das Unterteil des Deckels in Form eines Basisdeckels eine wannenförmige Vertiefung aufweist, auf der das Oberteil des Deckels aufgesetzt und mit dieser verbunden ist, wobei der Deckel weiterhin mit einer einen Zündschutz aufweisenden Entgasungsöffnung versehen ist und gegebenenfalls jeweils verschließbare Füll- und Kontrollöffnungen für die Zellen aufweist.

Ein Bleiakkumulator dieser Art ist aus dem DE-GM 84 30 246 bekannt. Er besteht aus einem Kunststoffgehäuse, in dem mehrere Zellen angeordnet sind, wobei üblicherweise sechs Zellen vorgesehen sind. Das Gehäuse mit den Zellen wird durch einen Deckel abgeschlossen, welcher auf das Gehäuse aufgebracht wird. Der Deckel besteht dabei aus einem Basisdeckel und einem dazu im Abstand angeordneten Abdeckteil, zwischen denen ein Hohlraum zur Säureabscheidung ausgebildet ist. Um die beim Betrieb des Bleiakkumulators entstehenden Gase abzuleiten, ist der Deckel weiterhin mit einer Entgasungsöffnung versehen, welcher einen Zündschutz in Form eines Flammsieb-Ventils aufweist. Schließlich weist der bekannte Bleiakkumulator für jede der Zellen jeweils eine Füll- und Kontrollöffnung auf, die mittels eines entsprechenden Verschlußstopfens verschließbar ist.

Der bekannte Bleiakkumulator mit einem im Deckel integrierten Entgasungssystem sowie mit einem Schutz gegen Zündung von außen baut nachteiligerweise sehr hoch. Dadurch ist der Platzbedarf für den Bleiakkumulator relativ groß, so daß die Einsatzmöglichkeiten beschränkt sind. Insbesondere im Nutzfahrzeugbereich macht sich die hohe Bauweise besonders nachteilig bemerkbar.

In der US-A-4 851 305 ist ein mehrzelliger Akkumulator offenbart, wobei die Zellen in einem Gehäuse angeordnet sind. Dieses Gehäuse ist oberseitig durch einen Deckel abgeschlossen, wobei zwischen einem Unterteil und einem dazu im Abstand angeordneten Oberteil ein labyrinthartiger Hohlraum zur Säureabscheidung ausgebildet ist. Zur Erzielung eines flachen Deckels für eine geringe Bauhöhe des Akkumulators weist dessen Unterteil in Form eines Basisdeckels eine wannenförmige Vertiefung auf. Diese wannenförmige Vertiefung wird oberseitig durch das Oberteil das Deckels in Form einer Deckplatte im wesentlichen bündig mit der Oberseite des Basisdeckels abgeschlossen.

Ein gattungsgemäßer Akkumulator ist aus der EP-A-0 107 469 bekannt, welche einen mehrzelligen Akkumulator offenbart, wobei die Zellen in einem Gehäuse angeordnet sind. Dieses Gehäuse ist oberseitig durch einen Deckel abgeschlossen, wobei zwischen einem Unterteil und einem dazu im Abstand angeordneten Oberteil ein labyrinthartiger Hohlraum zur Säureabscheidung ausgebildet ist. Das Oberteil weist einen sich in vertikaler Richtung erstreckenden Rand auf. Zur Erzielung eines flachen Deckels für eine geringe Bauhöhe des Akkumulators weist dessen Unterteil in Form eines Basisdeckels eine wannenförmige Vertiefung auf. Diese wannenförmige Vertiefung wird oberseitig durch das Oberteil des Deckels abgeschlossen. Dabei ist der Rand des Oberteils in Verlängerung der Außenwände des Gehäuses auf den Basisdeckel aufgesetzt.

Eine derartige Deckelausbildung des Akkumulators weist zwar eine relativ geringe Bauhöhe auf, jedoch besteht im Nutzfahrzeugbereich ein Bedürfnis, die Bauhöhe noch weiter zu reduzieren, da sich dort eine hohe Bauweise besonders nachteilig bemerkbar macht.

Davon ausgehend liegt der Erfindung die **Aufgabe** zugrunde, den bekannten Akkumulator, insbesondere Bleiakkumulator, vorzugsweise für Nutzkraftwagen derart weiterzuentwickeln, daß dessen Deckel noch niedriger gebaut ist.

Als technische **Lösung** wird mit der Erfindung vorgeschlagen, daß das Oberteil des Deckels in Form einer Deckplatte im wesentlichen bündig mit der Oberseite des Basisdeckels abschließend aufgesetzt ist und daß die Tiefe der wannenförmigen Vertiefung größer ist als die Höhe eines unterseitig umlaufenden Randes des Basisdeckels, mittels dem dieser auf dem Gehäuse befestigt ist.

Indem erfindungsgemäß der im Deckel ausgebildete Hohlraum teilweise in das Gehäuse des Akkumulators versenkt ist, wird dadurch eine weitere Optimierung der flachen Bauweise des Deckels erzielt. Der auf diese Weise ausgebildete Deckel für einen Bleiakkumulator zeichnet sich somit durch eine extrem geringe Bauhöhe aus, so daß die Platzbeanspruchung des Bleiakkumulators in vertikaler Richtung auf ein Minimum reduziert ist. Dies macht ihn insbesondere im Nutzkraftwagensektor besonders einsatzfähig und geeignet. Darüber hinaus ist der so ausgebildete Akkumulator mit seinem flachen Deckel stapelfähig.

Die wannenförmige Vertiefung des Basisdeckels des Deckels definiert dabei im wesentlichen den Hohlraum und nimmt im wesentlichen all diejenigen Teile auf, die für die Säureabscheidung notwendig sind. Die Befestigung der Deckplatte auf dem Basisdeckel kann dabei durch Verschweißen, insbesondere Heizelementeverschweißen oder auf andere Art und Weise erfolgen. Der Basisdeckel weist dabei für jede einzelne Zelle eine Öffnung zum Befüllen, Entgasen sowie als Rücklauf für die Säure auf. Zur Montage der Batterie wird zunächst der Deckel hergestellt, indem die Deckplatte auf dem Basisdeckel in der zuvor beschriebenen Weise befestigt wird. Mittels des so hergestellten Deckels kann dann zunächst eine separate Dichtigkeitsprüfung des gesamten Entgasungsbereiches im Deckel durchgeführt werden. Sofern diese erfolgreich verlaufen ist, wird anschließend der komplette Deckel auf dem Gehäuse des Akkumulators befestigt, wonach wiederum eine Dichtigkeitsprüfung der einzelnen Zellen durchgeführt werden kann. Der so ausgebildete Akkumulator mit seinem flachen Deckel ist stapelfähig sowie überflutungssicher. Ein anschließendes Füllen des Akkumulators mit Elektrolyt ist problemlos möglich. Dadurch, daß die Tiefe der wannenförmigen Vertiefung größer ist als die Höhe eines unterseitig umlaufenden Randes des Basisdeckels, mittels dem dieser auf dem Gehäuse befestigt ist, ist der im Deckel ausgebildete Hohlraum somit teilweise in das Gehäuse des Akkumulators versenkt, was eine weitere Optimierung der flachen Bauweise des Deckels zur Folge hat.

In einer vorteilhaften Weiterbildung wird vorgeschlagen, daß in der wannenförmigen Vertiefung sowie an der Unterseite der Deckplatte miteinander korrespondierende Rippen angeformt sind, die einerseits das Labyrinth definieren und andererseits eine gegenseitige Abstützung zur Stabilisierung des Deckels bilden. Dadurch läßt sich auf technisch überaus einfache Weise ein sehr funktionstüchtiger Deckel schaffen, der einerseits eine optimale Säureabscheidung und andererseits eine optimale Stabilität gewährleistet. Die Rippen des Labyrinths bilden dabei darüber hinaus einen Rückhalt für die in den Zellen befindliche Säure, wenn der Akkumulator gekippt wird.

Eine weitere Weiterbildung der Erfindung schlägt vor, daß die Poldurchführungen des Akkumulators in einem Bereich des Deckels liegen, der nicht von der Deckplatte abgedeckt ist. Dadurch ergibt sich im Bereich der Deckplatte des Deckels eine ebene Oberfläche, so daß beispielsweise entsprechende Befestigungselemente darauf angeordnet werden können, ohne daß die Pole sich störend auswirken. Darüber hinaus läßt sich dadurch auch eine sehr gute Stapelbarkeit realisieren.

Eine weitere bevorzugte Weiterbildung schlägt vor, daß in den Bereichen der einzelnen Zellen der Boden der wannenförmigen Vertiefung jeweils im gesamten Zellenbereich hin zu einer Zellenöffnung zum Befüllen, Entgasen sowie als Rücklauf für die Säure trichterförmig ausgebildet ist. Alle Ablaufflächen der jeweiligen Zelle besitzen somit ein Gefälle, deren tiefster Punkt die Zellenöffnung ist, so daß die sich in dem Hohlraum ansammelnde, kondensierte Säure problemlos in die jeweilige Zelle rückführbar ist.

In einer weiteren Weiterbildung wird vorgeschlagen, daß an der Unterseite des Basisdeckels auf dem Plattenpaket der jeweiligen Zelle aufliegende und dieses abstützende Stützglieder angeformt sind. Dadurch wird eine sichere Fixierung der Plattenpakete innerhalb der Zellen erzielt, so daß ein störungsfreier Betrieb, besonders bei hohen mechanischen Beanspruchungen, möglich ist.

In einer weiteren bevorzugten Weiterbildung wird vorgeschlagen, daß die Zellen in mehreren, vorzugsweise zwei Reihen angeordnet sind, die durch eine dazwischen angeordnete Trennwand voneinander getrennt sind und an deren Ende jeweils eine Entgasungsöffnung mit einem Zündschutz angeordnet ist. Die Entgasung erfolgt somit von Zelle zu Zelle, wobei die am Ende einer jeden Reihe angeordnete Entgasungsöffnung eine Zentralentgasung definiert. Aufgrund des langen Weges bis hin zur Entgasungsöffnung kann sehr viel von der Säure wieder abgeschieden und rückgeführt werden.

Eine Weiterbildung hiervon schlagt vor, daß in den Zellen der jeweiligen Reihe die Plattenpakete hintereinander angeordnet sind. Darunter ist zu verstehen, daß die Platten, welche die Plattenpakete bilden, parallel zur Längsseitenwand des Gehäuses ausgerichtet sind, daß sich also die Platten der Plattenpakete in Längsrichtung der Reihe erstrecken.

Der Zündschutz weist vorzugsweise eine Vorkammer sowie eine Nachkammer auf. Dies gewährleistet einen optimalen Durchtritt der Säuregase durch den Zündschutz hindurch, wobei aus der Nachkammer die Gase aus dem Akkumulator geführt werden.

In einer Weiterbildung des Zündschutzes wird vorgeschlagen, daß im Anschluß an diesen im Basisdeckel des Deckels ein Entgasungskanal ausgebildet ist. Durch diesen Entgasungskanal hindurch erfolgt somit der Austritt der Gase aus dem Akkumulator.

Damit die Gase nicht unkontrolliert aus dem Akkumulator austreten, ist vorzugsweise an den Entgasungskanal ein Entgasungsschlauch zur Entsorgung des Gases anschließbar.

In einer Weiterbildung des Entgasungskanals wird vorgeschlagen, daß dieser geneigt ist. Eine weitere Weiterbildung des Entgasungskanals schlägt vor, daß dieser bezüglich der Längserstreckung der Reihe schräg zur Seitenwand des Gehäuses hin verläuft. Schließlich stehen die den Reihen zugeordneten Entgasungskanäle vorzugsweise in Verbindung miteinander, so daß dadurch ein Ausgleich realisiert ist.

Schließlich wird in einer Weiterbildung vorgeschlagen, daß der Zündschutz ein schräg angeordnetes Flammsieb ist. Dies hat den Vorteil, daß bei einer eventuellen Entwässerung des Flammsiebes die abgesonderten Partikel auf den Boden der Flammsiebkammer fließen, von wo aus eine Rückführung in die Zellen möglich ist.

Dadurch bleibt die Entgasung des Akkumulators weiterhin gewährleistet und ein Zusetzen der Porenöffnungen des Flammsiebes wird verhindert. Die Flammsiebe sind redundant angeordnet.

Die zuvor beschriebenen vorteilhaften Weiterbildungen der Erfindung stellen für sich allesamt eigenständige Erfindungen dar, ohne daß diese Weiterbildungen zwangsläufig an die flache Bauweise des Deckels geknüpft sind.

Ein Ausführungsbeispiel eines erfindungsgemäßen Bleiakkumulators mit einem integrierten Entgasungssystem sowie mit einem Schutz gegen Zündung von außen wird nachfolgend anhand der Zeichnungen beschrieben. In diesen zeigt:

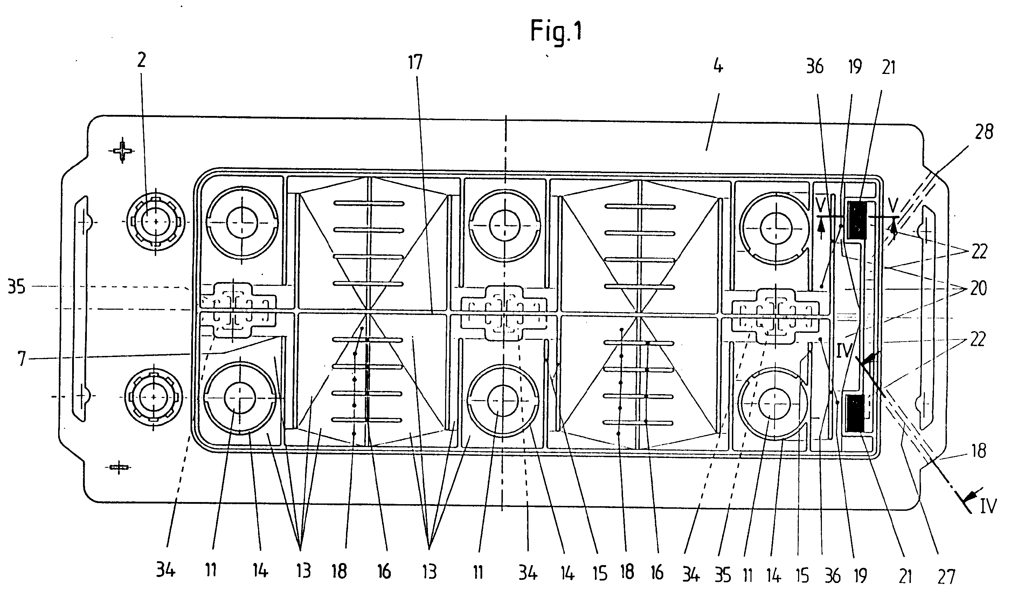

- Fig. 1: eine Draufsicht auf den Bleiakkumulator mit abgenommener Deckplatte des Deckels;
- Fig. 2: eine Draufsicht auf den Bleiakkumulator in Fig. 1, jedoch mit aufgesetzter Deckplatte;
- Fig. 3: einen Schnitt entlang der Linie III-III in Fig. 2;
- Fig. 4: einen Schnitt entlang der Linie IV-IV in Fig. 1 durch einen Entgasungskanal;
- Fig. 5: einen Schnitt entlang der Linie V-V in Fig. 1 durch einen Zündschutz;

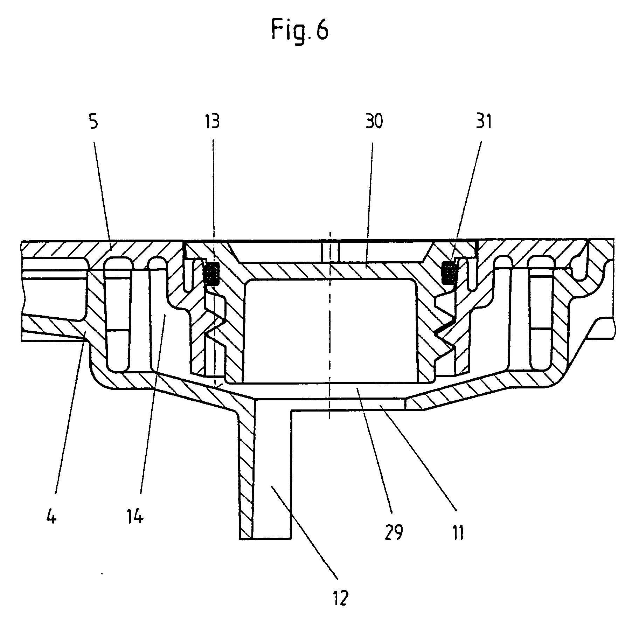

- Fig. 6: einen Schnitt entlang der Linie VI-VI in Fig. 2 durch eine mittels eines Verschlußstopfens verschlossenen Füll- und Serviceöffnung.

Der Bleiakkumulator besteht aus einem Gehäuse 1 aus Kunststoff, in dem insgesamt sechs Zellen in zwei Reihen angeordnet sind. Abgeführt wird die Zellenspannung über zwei Pole 2.

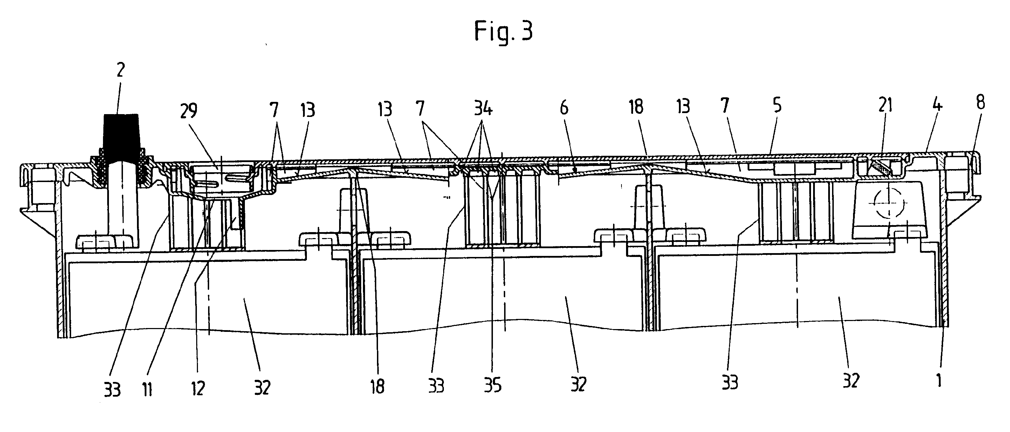

Das oben offene Gehäuse 1 ist durch einen Deckel 3 ebenfalls aus thermoplastischem Kunststoff abgeschlossen. Dieser Deckel 3 setzt sich dabei zusammen aus einem Basisdeckel 4 sowie aus einer Deckplatte 5. Wie die Schnittdarstellung gemäß Fig. 3 erkennen läßt, weist der Basisdeckel 4 des Deckels 1 eine wannenförmige Vertiefung 6 auf, welche oberseitig durch die Deckplatte 5 derart abgeschlossen ist, daß die Deckplatte 5 mit der Oberseite des Basisdeckels 4 bündig abschließt. Zwischen dem Basisdeckel 4 und der Deckplatte 5 des Deckels 3 ist ein Hohlraum 7 für die Säureabscheidung sowie für die Entgasung des Bleiakkumulators definiert. Befestigt wird der Deckel 3 auf dem Gehäuse 1 dadurch, daß der Basisdeckel 4 des Deckels 3 unterseitig einen umlaufenden Rand 8 aufweist, der mit der Oberkante des Gehäuses 1 verschweißt ist.

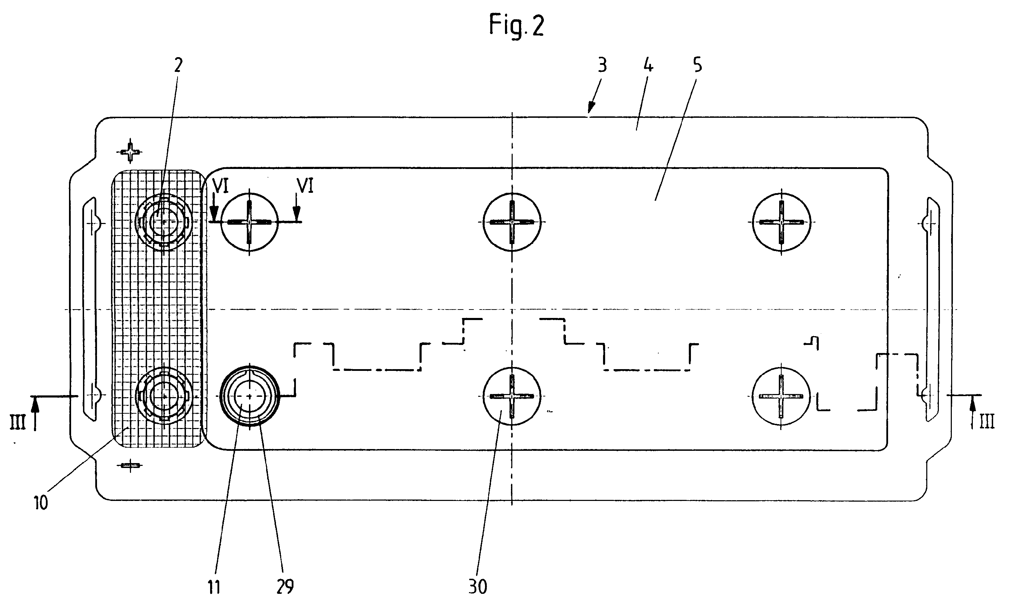

In dem Basisdeckel 4 ist in denjenigen Bereich, der nicht durch die Deckplatte 5 abgedeckt ist, eine Poldurchführung 9 für die Pole 2 vorgesehen. Wie in Fig. 2 durch die karierte Schraffur angedeutet ist, kann der Bereich der Pole 2 als Berührungsschutz mit einer einteiligen Abdeckkappe 10 geschützt werden. Diese ist als steckbares Teil ausgelegt und kann in verschiedenen Stellungen zur erleichterten Montage der Akkumulator-Anschlußkabel gebracht werden. Diese Abdeckkappe 10 ist sowohl in Ruhestellung als auch in der aufgeklappten Endstellung arretierbar.

Jede der sechs Zellen weist eine im Basisdeckel 4 ausgebildete Öffnung 11 zum Befüllen der Zelle, Entgasen sowie als Rücklauf für die Säure auf. An dieser Öffnung 11 ist ein in die Zelle senkrecht nach unten ragender Anzeigestab 12 angeformt, welcher als Anzeige des maximalen Säurestandes dient. Der Basisdeckel 4 ist im Bereich der Öffnung 11 trichterförmig ausgebildet, indem sämtliche Ablaufflächen 13 ein Gefälle besitzen, deren tiefster Punkt die Öffnung 11 ist, so daß dadurch ein Rücklauf von kondensierter Säure geschaffen ist. Um die Öffnung 11 herum ist ein ringförmger Schutzsteg 14 angeordnet, durch den bei einem eventuell kurzzeitigen Kippen des Akkumulators die Säure zurückgehalten wird, wobei nur eine geringe Menge in den zwischen dem Basisdeckel 4 und der Deckplatte 5 ausgebildeten, kammerartigen Hohlraum 7 gelangt. Der Rückhalt wird noch dadurch erhöht, daß zwischen dem Basisdeckel 4 und der Deckplatte 5 des Deckels 3 Rippen 15 angeordnet sind.

In Längsrichtung verlaufende, stegartige Rippen 16 fangen bei einer Befestigung des Akkumulators über dem Deckel 3 die auftretenden Spannkräfte ab.

Der Deckel 3 ist mit einem integrierten Entgasungssystem ausgestattet. Dabei sind in dem dargestellten Ausführungsbeispiel entsprechend den beiden Zellenreihen zwei unabhängig voneinander arbeitende Entgasungssysteme vorgesehen. Zu diesem Zweck ist zwischen den beiden Reihen eine mittlere Trennwand 17 vorgesehen, die die beiden Reihen gasdicht voneinander trennt. Die Entgasung in den beiden Reihen erfolgt von Zelle zu Zelle. Das Gas strömt dabei durch die Öffnungen 11 hindurch, in den zwischen dem Basisdeckel 4 und der Deckplatte 5 ausgebildeten Hohlraum 7. Nach Passieren von Entgasungsdurchbrüchen 18 zwischen den Zellen gelangen die Gase durch ein Labyrinth 19 hindurch in eine Vorkammer 20 eines Zündschutzes 21, dem hinwiederum eine Nachkammer 22 nachgeordnet ist. Die Gase gelangen somit von der Vorkammer 20 nach Passieren eines im Basisdeckel 4 ausgebildeten Durchbruches 23 in den Bereich des Zündschutzes 21 in Form eines Flammsiebes, durch das hindurch die Gase strömen und dabei in der Nachkammer 22 münden. Der Zündschutz 21 ist in Aufnahmen 24 mit Aufnahmerändern 25 des Basisdeckels 4 verbunden. Durch den Zündschutz 21 ist ein Schutz gegen eine Zündung von außen gewährleistet. Daß sowohl die Vorkammern 20 als auch die Nachkemmern 22 der beiden Reihen jeweils in Verbindung miteinander stehen und da zwei Zündschutze 21 vorgesehen sind, ist eine mehrfache Entgasungssicherheit geschaffen. Da die Flammsiebe des Zündschutzes 21 schräg angeordnet sind, wird sichergestellt, daß bei einer eventuellen Durchnässung des Flammsiebes die abgesonderten Partikel auf den Boden 26 der Vorkammer 20 und weiter über die Ablaufflächen 13 und die Öffnungen 11 zurück in die Zellen fließen. Da sich die Porenöffnungen des Flammsiebes nicht zusetzen, bleibt die Entgasung weiter gewährleistet.

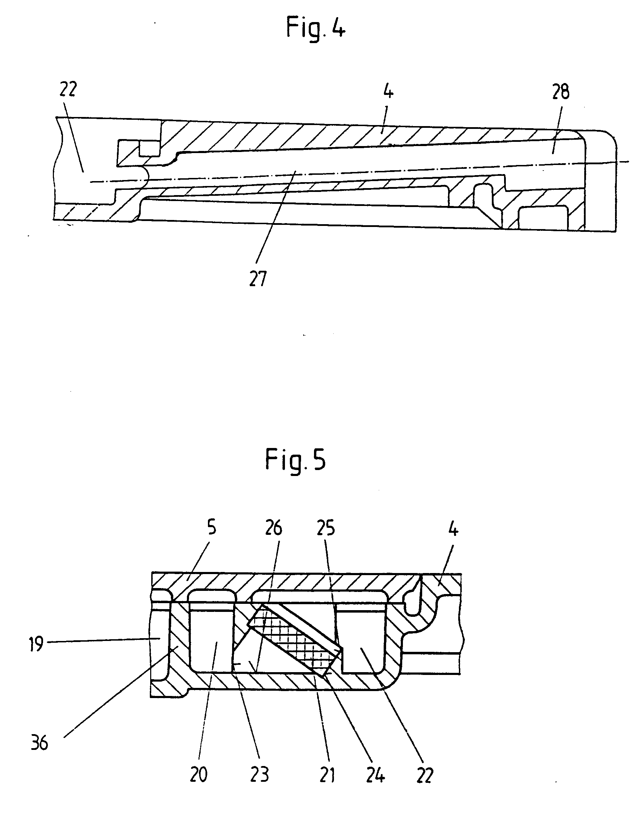

Aus der Nachkammer 22 der jeweiligen Zellenreihe werden dann die Entladegase durch Entgasungsöffnungen in Form von Entgasungskanälen 27 aus dem Akkumulator geführt. Diese Entgasungskanäle 27 sind, wie die Schnittdarstellung gemäß Fig. 4 erkennen läßt, geneigt sowie schräg zur Längsseitenwand des Gehäuses 1 hin geführt. Weiterhin sind sie mit einem genormten Anschluß 28 ausgestattet, so daß die Entladegase kontrolliert mittels Schläuchen abgeführt werden können.

Jede Zelle besitzt eine Füll- und Serviceöffnung 29, die mittels eines Verschlußstopfens 30 unter Zwischenanordnung einer Dichtung 31 verschlossen werden kann.

In der Schnittdarstellung gemäß Fig. 3 sind die Plattenpakete 32 der einzelnen Zellen erkennbar. Diese sind jeweils mittels eines Stützgliedes 33 abgestützt. Die Verbindung der Stützglieder 33 mit dem Basisdeckel 4 erfolgt in einer Aussparung 34 mittels entsprechend angeordneter Rippen 35.

Der dargestellte Akkumulator zeichnet sich durch einen extrem flachen und daher wenig hoch bauenden Deckel 3 aus. Darüber hinaus besitzt er in Längsrichtung eine große Kippsicherheit (90°), ohne daß die Gefahr eines unkontrollierten Austrittes der Säure besteht. Durch die besondere Anordnung von Umlenkstegen 36 wird der Zündschutz 21 zusätzlich vor Säurebenetzung geschützt und somit eine besonders hohe Kippsicherheit des Akkumulators erreicht. Der Akkumulator läßt sich bevorzugt in Nutzkraftwagen als Starter- und Antriebsbatterie einsetzen. Der Akkumulator ist jedoch nicht auf dieses Anwendungsgebiet beschränkt, sondern kann gleichermaßen überall dort eingesetzt werden, wo Akkumulatoren mit einem niedrig bauenden Deckel 3 sowie mit hoher Kippsicherheit gefordert sind.

### Bezugszeichenliste

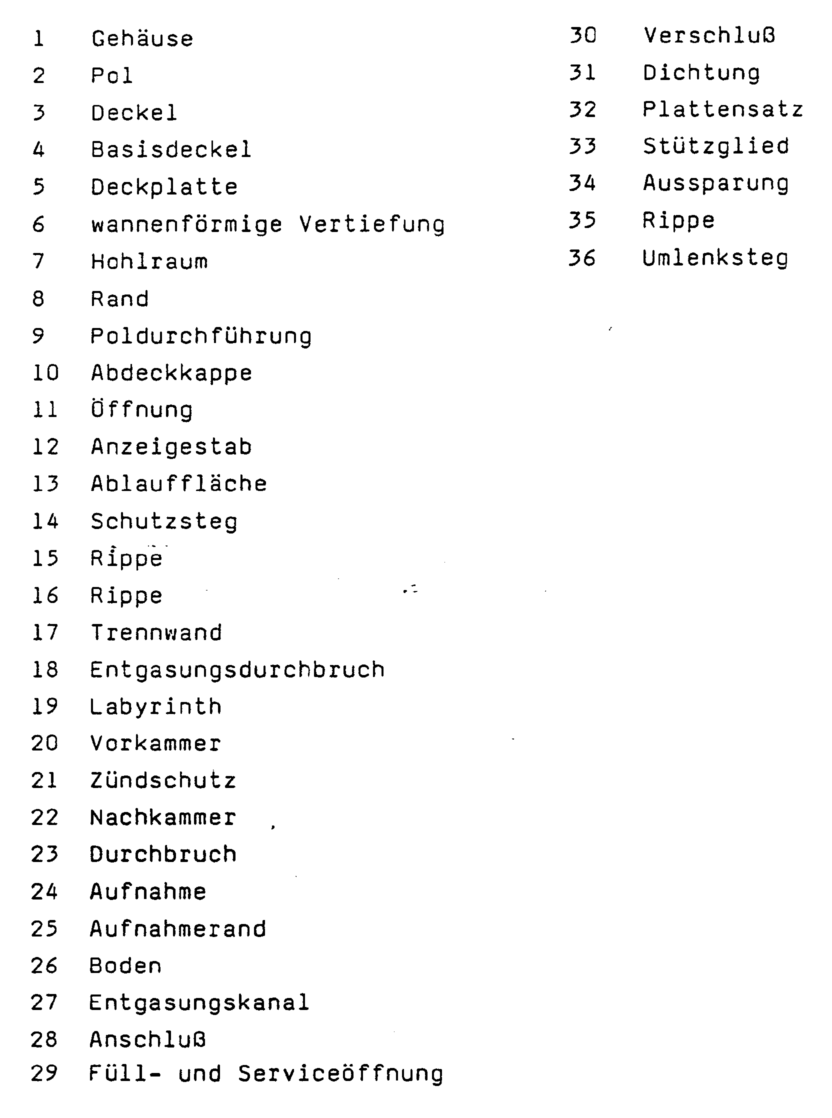

## Patentansprüche

1. Akkumulator, insbesondere Bleiakkumulator, vorzugsweise für Nutzkraftwagen, mit einem mehrere Zellen aufweisenden Gehäuse (1) sowie mit einem das Gehäuse (1) abschließenden Deckel (3), in dem zwischen einem Unterteil und einem dazu im Abstand angeordneten Oberteil ein labyrinthartiger Hohlraum (7) zur Säureabscheidung ausgebildet ist, wobei das Unterteil des Deckels (3) in Form eines Basisdeckels (4) eine wannenförmige Vertiefung (6) aufweist, auf der das Oberteil des Deckels aufgesetzt und mit diesem verbunden ist, wobei der Deckel (3) weiterhin mit einer einen Zündschutz (21) aufweisenden Entgasungsöffnung versehen ist und gegebenenfalls jeweils verschließbare Füll- und Kontrollöffnungen (2) für die Zellen aufweist,
**dadurch gekennzeichnet**,
daß das Oberteil des Deckels (3) in Form einer Deckplatte (5) im wesentlichen bündig mit der Oberseite des Basisdeckels (4) abschließend aufgesetzt ist und
daß die Tiefe der wannenförmigen Vertiefung (6) größer ist als die Höhe eines unterseitig umlaufenden Randes (8) des Basisdeckels (4), mittels dem dieser auf dem Gehäuse (3) befestigt ist.

2. Akkumulator nach Anspruch 1, dadurch gekennzeichnet, daß in der wannenförmigen Vertiefung (6) sowie an der Unterseite der Deckplatte (5) miteinander korrespondierende Rippen (15, 16) angeformt sind, die einerseits das Labyrinth definieren und andererseits eine gegenseitige Abstützung zur Stabilisierung des Deckels (3) bilden.

3. Akkumulator nach Anspruch 1 oder 2, dadurch gekennzeichnet, daß die Poldurchführungen (9) des Akkumulators in einem Bereich des Deckels (3) liegen, der nicht von der Deckplatte (5) abgedeckt ist.

4. Akkumulator nach einem der Ansprüche 1 bis 3, dadurch gekennzeichnet, daß in den Bereichen der einzelnen Zellen der Boden der wannenförmigen Vertiefung (6) jeweils im gesamten Zellenbereich hin zu einer Zellenöffnung (11) zum Befüllen, Entgasen sowie als Rücklauf für die Säure trichterförmig ausgebildet ist.

5. Akkumulator nach einem der Ansprüche 1 bis 4, dadurch gekennzeichnet, daß an der Unterseite des Basisdeckels (4) auf dem Plattenpaket (32) der jeweiligen Zelle aufliegende und dieses abstützende Stützglieder (33) angeformt sind.

6. Akkumulator nach einem der Ansprüche 1 bis 5, dadurch gekennzeichnet, daß die Zellen in mehreren, vorzugsweise zwei Reihen angeordnet sind, die durch eine dazwischen angeordnete Trennwand (17) voneinander getrennt sind, an deren Ende sich eine oder mehrere gemeinsame Entgasungsöffnungen (27) mit einem Zündschutz (21) befinden.

7. Akkumulator nach Anspruch 6, dadurch gekennzeichnet, daß in den Zellen der jeweiligen Reihe die Plattenpakete (32) hintereinander angeordnet sind.

8. Akkumulator nach Anspruch 6 oder 7, dadurch gekennzeichnet, daß der Zündschutz (21) eine Vorkammer (20) sowie eine Nachkammer (22) aufweist.

9. Akkumulator nach einem der Ansprüche 6 bis 8, dadurch gekennzeichnet, daß im Anschluß an den Zündschutz (21) im Basisdeckel (4) des Deckels (3) ein Entgasungskanal (27) ausgebildet ist.

10. Akkumulator nach Anspruch 9, dadurch gekennzeichnet, daß an den Entgasungskanal (27) ein Entgasungsschlauch zur Entsorgung des Gases anschließbar ist.

11. Akkumulator nach Anspruch 9 oder 10, dadurch gekennzeichnet, daß der Entgasungskanal (27) geneigt ist.

12. Akkumulator nach einem der Ansprüche 9 bis 11, dadurch gekennzeichnet, daß der Entgasungskanal (27) bezüglich der Längserstreckung der Reihe schräg zur Seitenwand des Gehäuses (1) hin verläuft.

13. Akkumulator nach einem der Ansprüche 9 bis 12, dadurch gekennzeichnet, daß die den Reihen zugeordneten Entgasungskanäle (27) in Verbindung miteinander stehen und ein redundantes System bilden.

14. Akkumulator nach einem der Ansprüche 6 bis 13, dadurch gekennzeichnet, daß der Zündschutz (21) ein schräg angeordnetes Flammsieb ist.

15. Akkumulator nach den Ansprüchen 1 bis 14, dadurch gekennzeichnet, daß im Entgasungssystem ein oder mehrere ein redundantes System bildende Ventile eingesetzt sind.

## Claims

1. Accumulator, in particular lead accumulator, preferably for commercial motor vehicles, with a housing (1) comprising several cells as well as with a cover (3) which closes off the housing (1) and in which a labyrinthine cavity (7) for acid precipitation is formed between a lower portion and an upper portion spaced apart therefrom, wherein the lower portion of the cover (3) in the form of a base cover (4) comprises a trough-like recess (6) on top of which the upper portion of the cover is placed and connected thereto, wherein the cover (3) is further provided with a gas release opening comprising ignition prevention means (21) and comprises filling and inspection openings (2) for the cells which can in each case be sealed if occasion arises, characterised in that the upper portion of the cover (3) in the form of a top plate (5) is placed on top essentially flush with the upper side of the base cover (4) so as to form a closure and in that the depth of the trough-like recess (6) is greater than the height of an edge (8) of the base cover (4) which extends around the lower side and by means of which the base cover is mounted on the housing (3).

2. Accumulator according to claim 1, characterised in that in the trough-like recess (6) as well as on the lower side of the top plate (5) are integrally formed ribs (15, 16) which mate with each other and which on the one hand define the labyrinth and on the other hand form a mutual support for stabilising the cover (3).

3. Accumulator according to claim 1 or 2, characterised in that the terminal bushes (9) of the accumulator are located in a region of the cover (3) which is not covered by the top plate (5).

4. Accumulator according to any of claims 1 to 3, characterised in that in the regions of the individual cells the bottom of the trough-like recess (6) is in each case funnel-shaped in the whole cell region towards a cell opening (11) for filling or gas release and also as a return for the acid.

5. Accumulator according to any of claims 1 to 4, characterised in that on the lower side of the base cover (4) are integrally formed support members (33) which rest on the plate assembly (32) of the respective cell and support it.

6. Accumulator according to any of claims 1 to 5, characterised in that the cells are arranged in several, preferably two rows which are separated from each other by a partition (17) arranged therebetween, at the end of which are located one or more common gas release openings (27) with ignition prevention means (21).

7. Accumulator according to claim 6, characterised in that the plate assemblies (32) are arranged one behind the other in the cells of the respective row.

8. Accumulator according to claim 6 or 7, characterised in that the ignition prevention means (21) comprises a preliminary chamber (20) as well as a subsequent chamber (22).

9. Accumulator according to any of claims 6 to 8, characterised in that adjoining the ignition prevention means (21) in the base cover (4) of the cover (3) is formed a gas release channel (27).

10. Accumulator according to claim 9, characterised in that a gas release hose can be connected to the gas release channel (27) for disposal of the gas.

11. Accumulator according to claim 9 or 10, characterised in that the gas release channel (27) is inclined.

12. Accumulator according to any of claims 9 to 11, characterised in that the gas release channel (27) in relation to the longitudinal extent of the row extends obliquely towards the side wall of the housing (1).

13. Accumulator according to any of claims 9 to 12, characterised in that the gas release channels (27) associated with the rows communicate with each other and form a redundant system.

14. Accumulator according to any of claims 6 to 13, characterised in that the ignition prevention means (21) is an obliquely arranged flame screen.

15. Accumulator according to claims 1 to 14, characterised in that one or more valves forming a redundant system are used in the gas release system.

## Revendications

1. Accumulateur, en particulier accumulateur au plomb, de préférence pour véhicules commerciaux, comprenant un bac (1) à plusieurs éléments ainsi qu'un couvercle (3) qui ferme le bac (1), dans lequel est ménagée, entre une partie inférieure et une partie supérieure disposée à distance de celle-ci, une cavité à labyrinthe (7) pour créer une séparation avec l'acide, qui est pourvu d'une ouverture de dégazage (pertuis de dégazage (18)) munie d'une protection anti-inflammation (21) et qui comporte le cas échéant des ouvertures individuelles obturables (29) de remplissage et de contrôle des éléments, caractérisé en ce que, pour réaliser un couvercle plat (3), la partie inférieure de ce dernier formant la base (4) du couvercle comporte un renfoncement en cuvette (6), sur lequel la partie supérieure du couvercle (3) formant plaque de recouvrement (5) est posée de manière à coïncider de manière jointive avec la partie supérieure de la base (4) du couvercle et à être solidarisée avec elle.

2. Accumulateur selon la revendication 1, caractérisé en ce que, dans le renfoncement en cuvette (6) ainsi que sur le dessous de la plaque de recouvrement (5), sont moulées des nervures (15, 16) qui coïncident entre elles et qui, d'une part, définissent le labyrinthe et, d'autre part, forment un appui mutuel pour stabiliser le couvercle (3).

3. Accumulateur selon la revendication 1 ou 2, caractérisé en ce que les passages (9) des bornes de l'accumulateur se trouvent dans une zone du couvercle (3) qui n'est pas recouverte pas la plaque de recouvrement (5).

4. Accumulateur selon l'une des revendications 1 à 3, caractérisé en ce que, dans la zone de chaque élément, le fond du renfoncement en cuvette (6) est conçu, dans toute la zone de l'élément, en forme d'entonnoir en direction d'une ouverture (11) de l'élément servant au remplissage, au dégazage ainsi qu'au reflux de l'acide.

5. Accumulateur selon l'une des revendications 1 à 4, caractérisé en ce que des pièces d'appui (33) reposant sur l'empilage de plaques (32) de chaque élément et lui servant d'appui sont moulées sur le dessous de la base (4) du couvercle.

6. Accumulateur selon l'une des revendications 1 à 5, caractérisé en ce que les éléments sont disposés sur plusieurs rangées, de préférence au nombre de deux, qui sont séparées les unes des autres par une paroi de séparation (17) disposée entre elles, et à l'extrémité de chacune desquelles est ménagée une ou plusieurs ouvertures de dégazage (27) munies d'une protection anti-inflammation (21).

7. Accumulateur selon la revendication 6, caractérisé en ce que les empilages de plaques (32) sont disposés les uns derrière les autres dans les éléments de chaque rangée.

8. Accumulateur selon la revendication 6 ou 7, caractérisé en ce que la protection anti-inflammation (21) comporte une chambre avant (20) ainsi qu'une chambre arrière (22).

9. Accumulateur selon l'une des revendications 6 à 8, caractérisé en ce que, dans le prolongement de la protection anti-inflammation (21), un canal de dégazage (27) est ménagé dans la base (4) du couvercle (3).

10. Accumulateur selon la revendication 9, caractérisé en ce qu'un flexible de dégazage peut être relié au canal de dégazage (27) pour évacuer le gaz.

11. Accumulateur selon la revendication 9 ou 10, caractérisé en ce que le canal de dégazage (27) est en pente.

12. Accumulateur selon l'une des revendications 9 à 11, caractérisé en ce que, par rapport à l'extension longitudinale de la rangée, le canal de dégazage (27) s'étend en biais en direction de la paroi latérale du bac (1).

13. Accumulateur selon l'une des revendications 9 à 12, caractérisé en ce que les canaux de dégazage (27) associés aux rangées communiquent les uns avec les autres et forment un système redondant.

14. Accumulateur selon l'une des revendications 6 à 13, caractérisé en ce que la protection anti-inflammation (21) est un tamis de retenue de retours de flamme placé en position inclinée.

15. Accumulateur selon les revendications 1 à 14, caractérisé en ce qu'une ou plusieurs valves formant un système redondant sont implantées dans le système de dégazage.
